# EUROPÄISCHE PATENTANMELDUNG

(11) **EP 3 153 671 A1**
(43) Veröffentlichungstag der Anmeldung: **12.04.2017**
(21) Anmeldenummer: 15188995.3
(22) Anmeldetag: 08.10.2015
(51) Int. Cl.: F01D 21/04

(54) **SCHUTZVORRICHTUNG FÜR EINE STRÖMUNGSMASCHINE**

(71) Anmelder: MTU Aero Engines AG, 80995 München (DE)
(72) Erfinder: Schönhoff, Carsten, 80636 München (DE); Schneider, René, 85521 Ottobrunn (DE); Kufner, Petra, 85586 Poing (DE); Dr. Hassler, Marc, 82140 Olching (DE)

(57) **Zusammenfassung**

Die Erfindung betrifft eine Schutzvorrichtung (30) für eine Strömungsmaschine (10), insbesondere ein Flugtriebwerk, mit wenigstens einem ringförmigen Gehäuse (18), mittels welchem ein Strömungsraum (20) der Strömungsmaschine (10) wenigstens teilweise radial nach außen begrenzbar ist und welches wenigstens einen axialen Teilbereich (32) geringerer radialer Wandstärke und wenigstens einen daran angrenzenden axialen Teilbereich (34) größerer radialer Wandstärke aufweist, wobei das Gehäuse (18) derart ausgestaltet ist, dass der Teilbereich (34) größerer Wandstärke in axialer Richtung der Strömungsmaschine (10) von einer stromabwärts in Strömungsrichtung der Strömungsmaschine (10) liegenden Hinterkante (40) einer Leitschaufel (26) beabstandet ist und sich in Strömungsrichtung der Strömungsmaschine (10) stromabwärts über eine Vorderkante (42) einer stromabwärts nächstfolgenden Leitschaufel (26') erstreckt.

## Beschreibung

Die Erfindung betrifft eine Schutzvorrichtung für eine Strömungsmaschine gemäß dem Oberbegriff des Patentanspruchs 1. Weiterhin betrifft die Erfindung eine Strömungsmaschine, ein Flugtriebwerk, sowie ein Berechnungsverfahren zum Auslegen einer Schutzvorrichtung.

Bei Strömungsmaschinen, insbesondere bei Gasturbinen, kann es bei einem strukturellen Versagen eines Bauteils zu einem Durchschlagen eines Gehäuses und damit Herausschleudern eines Teils dieses Bauteils aus der Strömungsmaschine kommen. Insbesondere, wenn es zu einem Bruch einer Laufschaufel einer Strömungsmaschine kommt, kann diese mit einer hohen Geschwindigkeit aus einem Gehäuse der Strömungsmaschine herausschlagen und dann Maschinen in der Umgebung beschädigen und/oder umstehende Personen verletzen. Aus diesem Grund wird das Gehäuse einer Strömungsmaschine so ausgelegt, dass es eine Wandstärke und dadurch eine Widerstandsfähigkeit gegen Durchschlagen aufweist, mittels welchen ein Durchdringen des Gehäuses durch ein Teil bei einem strukturellen Versagen eines Bauteils wenigstens überwiegend verhindert. Dazu kann das Gehäuse beispielsweise mit Zusatzteilen einer Schutzvorrichtung versehen werden oder aber auch selbst als Schutzvorrichtung ausgebildet sein. Eine solche Schutzvorrichtung wird auch als Containment oder als Triebwerkscontainment bezeichnet.

Beispielsweise ist es aus der EP 2 551 467 A1 bekannt, ein Gehäuse einer Strömungsmaschine so auszubilden, dass es Teilbereiche geringerer radialer Wandstärke und Teilbereiche größerer radialer Wandstärke aufweist. Die Bereiche größerer radialer Wandstärke sind dabei in einem axialen Bereich der Strömungsmaschine angeordnet, in welchem sich jeweilige Laufschaufelstufen befinden. Gerade jeweilige Laufschaufelstufen sind besonders bedroht von einem strukturellen Versagen, da sie üblicherweise mit einer hohen Drehzahl um eine axiale Längsachse der Strömungsmaschine rotieren und dadurch besonders starke Fliehkräfte auf jeweilige Laufschaufeln wirken.

Nachteilig an einer solchen Schutzvorrichtung ist, dass die Teilbereiche größerer Wandstärke ein jeweiliges Zusatzgewicht bedeuten. Gerade bei dem Einsatz einer Strömungsmaschine als Antrieb ist ein geringes Gewicht jedoch wichtig. Insbesondere bei dem Einsatz der Strömungsmaschine als ein Flugtriebwerk kann durch ein besonders schweres Gehäuse bzw. eine besonders schwere Schutzvorrichtung der Treibstoffverbrauch des entsprechenden Fluggeräts besonders hoch sein. Außerdem kann bei einer ungünstigen axialen Lage der Teilbereiche größerer und geringerer Wandstärken das Gehäuse dennoch durchschlagen werden, wenn ein Teil eines Bauteils bei einem strukturellen Versagen in einen Bereich geringerer Wandstärke einschlägt.

Aus diesem Grund ist es Aufgabe der vorliegenden Erfindung, eine Schutzvorrichtung für eine Strömungsmaschine zu schaffen, mit welcher die Strömungsmaschine besonders leicht und sicher ist. Außerdem ist es Aufgabe der vorliegenden Erfindung, eine Strömungsmaschine und ein Flugtriebwerk zu schaffen, welche jeweils besonders leicht und sicher sind.

Diese Aufgabe wird erfindungsgemäß durch eine Schutzvorrichtung mit den Merkmalen des Patentanspruchs 1 gelöst. Zudem wird diese Aufgabe durch eine Strömungsmaschine mit den Merkmalen des Patentanspruchs 13 und ein Flugtriebwerk mit den Merkmalen des Patentanspruchs 14 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der jeweiligen Vorrichtungen und des Berechnungsverfahrens als vorteilhafte Ausgestaltungen der jeweiligen anderen Vorrichtungen sowie des Berechnungsverfahrens und umgekehrt anzusehen sind.

Ein erster Aspekt der Erfindung betrifft eine Schutzvorrichtung für eine Strömungsmaschine, insbesondere eine Gasturbine, mit wenigstens einem ringförmigen Gehäuse, mittels welchem ein Strömungsraum der Strömungsmaschine wenigstens teilweise radial nach außen begrenzbar ist und welches wenigstens einen axialen Teilbereich geringerer radialer Wandstärke und wenigstens einen daran angrenzenden axialen Teilbereich größerer radialer Wandstärke aufweist. Die axiale Richtung ist dabei durch eine axiale Längsachse der Strömungsmaschine, insbesondere durch eine Welle der Strömungsmaschine, definiert. Die radiale Richtung ist entsprechend orthogonal zu dieser Längsachse. Eine axiale und eine radiale Richtung der Schutzvorrichtung ist dabei entsprechend durch eine Einbaulage der Schutzvorrichtung an der Strömungsmaschine festgelegt und korrespondiert damit zu der axialen und der radialen Richtung der Strömungsmaschine.

Die erfindungsgemäße Schutzvorrichtung ist dadurch gekennzeichnet, dass das Gehäuse derart ausgestaltet ist, dass der Teilbereich größerer Wandstärke in axialer Richtung der Strömungsmaschine von einer stromabwärts in Strömungsrichtung der Strömungsmaschine liegenden Hinterkante einer Leitschaufel beabstandet ist und sich in Strömungsrichtung der Strömungsmaschine stromabwärts über eine Vorderkante einer stromabwärts nächstfolgenden Leitschaufel erstreckt. Insbesondere ist der Teilbereich größerer Wandstärke von der Hinterkante der Leitschaufel in axialer Richtung stromabwärts beabstandet. Die Strömungsrichtung ist dabei durch einen Gasstrom durch jeweilige Stufen der Strömungsmaschine, insbesondere durch einen Gasstrom durch den Strömungsraum, definiert. Üblicherweise ist dabei die Strömungsrichtung parallel zu der Längsachse der Strömungsmaschine. Die Leitschaufeln sind jeweilige stillstehende Schaufeln, während jeweilige Laufschaufeln rotierende Schaufeln der Strömungsmaschine sind. Die Leitschaufel kann dabei auch Teil eines Leitschaufelrings sein und die Hinterkante und die Vorderkante einer Kante des Leitschaufelrings entsprechen. Der Strömungsraum ist ein durchströmter Bereich der Gasturbine, wie beispielsweise ein Verdichter, eine Brennkammer und/oder eine Turbine.

Bei bisher bekannten Schutzvorrichtungen für Strömungsmaschinen wurde angenommen, dass jeweilige Laufschaufeln auf das Gehäuse in dem axialen Teilbereich einschlagen, in welchem sie angeordnet sind. Gleichzeitig wurde angenommen, dass jeweilige Leitschaufeln eine Flugbahn eines Teils bei einem strukturellen Versagen eines Bauteils der Strömungsmaschine in axialer Richtung blockieren. Entsprechend wurde bei zu den Leitschaufeln korrespondierenden axialen Teilbereichen nicht mit einem Einschlag von einem Teil bei einem strukturellen Versagen gerechnet. Deswegen wurden dort beim Gehäuse keine Teilbereiche größerer Wandstärke vorgesehen. Es hat sich jedoch überraschend gezeigt, dass es auch zu einem Einschlagen eines Teils wenigstens in einen Teilbereich der axialen Erstreckung der Leitschaufeln in das Gehäuse kommen kann.

Deswegen ist es zum einen nötig, den Teilbereich größerer Wandstärke über einen so großen axialen Längenbereich zu erstrecken, dass sich dieser in wenigstens teilweiser radialer Überdeckung mit einer auf eine zu dem Teilbereich größerer Wandstärke korrespondierende Laufschaufel stromabwärts nächstfolgenden Leitschaufel erstreckt. Gleichzeitig hat sich gezeigt, dass es nicht nötig ist, den axialen Teilbereich größerer Wandstärke so weit stromaufwärts zu erstrecken, dass er von der dem Teilbereich größerer Wandstärke korrespondierenden Laufschaufel aus gesehen bis zu der stromaufwärts nächstliegenden Leitschaufel ragt. Insgesamt ist es also der axiale Teilbereich größerer radialer Wandstärke gegenüber bekannten Schutzvorrichtungen axial stromabwärts verschoben. Dadurch ist die Schutzvorrichtung besonders sicher. Dadurch, dass bei der Auslegung der Schutzvorrichtung eine vermutliche Flugbahn des Teils bei dem strukturellen Versagen beachtet bzw. simuliert wird, kann der axiale Teilbereich größerer Wandstärke besonders gut an tatsächliche Anforderungen angepasst werden. Damit kann sich der axiale Teilbereich größerer Wandstärke über einen besonders kleinen axialen Teilbereich erstrecken und somit die Schutzvorrichtung besonders leicht sein.

Bei jeweiligen Teilbereichen größerer Wandstärke am Anfang oder Ende der Strömungsmaschine beziehungsweise eines jeweiligen Bereichs am Anfang und Ende beispielsweise eines Verdichters, einer Brennkammer oder einer Turbine ist das Gehäuse dagegen häufig bereits durch umliegende strukturelle Bauteile der Strömungsmaschine zumindest in einem solchen Endbereich mit gestützt und/oder geschützt. Damit ist die Strömungsmaschine dort bereits besonders geschützt gegen ein Herausschlagen von Teilen. Gerade bei einem mittleren Teilbereich ist also die vorhergehend beschriebene vorteilhafte Positionierung und/oder Erstreckung des axialen Teilbereichs größerer Wandstärke besonders wichtig und resultiert in einer besonders hohen Gewichtseinsparung und/oder einem besonders hohen Schutz.

Der Teilbereich geringerer Wandstärke kann an den Teilbereich größerer Wandstärke auch nur mittelbar angrenzen. Dabei kann ein Zwischenbereich oder Übergangsbereich zwischen den Teilbereichen geringerer Wandstärke und größerer Wandstärke vorgesehen sein. Dieser Zwischenbereich oder Übergangsbereich ist in axialer Richtung vorzugsweise nicht länger als 300 %, insbesondere 100 %, einer Differenz der Wandstärke des Teilbereichs größerer Wandstärke und des daran mittelbar angrenzenden Teilbereichs geringerer Wandstärke.

In weiterer vorteilhafter Ausgestaltung der erfindungsgemäßen Schutzvorrichtung ist es vorgesehen, dass der Teilbereich größerer Wandstärke in axialer Richtung stromabwärts beabstandet von der Hinterkante der Leitschaufel mit einem Abstand von 10 %, 15 %, 20 %, 25 %, 30 %, 35 %, 40 %, 45 %, 50 % oder 55 % bis 15 %, 20 %, 25 %, 30 %, 35 %, 40 %, 45 %, 50 %, 55 % oder 60 %, vorzugsweise 20 % bis 30 %, einer Sehnenlänge dieser Leitschaufel beginnt. Dadurch kann eine besonders sichere Schutzvorrichtung geschaffen werden, welche aufgrund eines besonders in Strömungsrichtung stromabwärts späten Beginn des axialen Teilbereichs größerer Wandstärke besonders leicht ist.

In weiterer vorteilhafter Ausgestaltung der erfindungsgemäßen Schutzvorrichtung ist es vorgesehen, dass der Teilbereich größerer Wandstärke in axialer Richtung stromabwärts hinter der Vorderkante der stromabwärts nächstfolgenden Leitschaufel mit einer radialen Überdeckung von 10 %, 15 %, 20 %, 25 %, 30 %, 35 %, 40 %, 45 %, 50 % oder 55 % bis 15 %, 20 %, 25 %, 30 %, 35 %, 40 %, 45 %, 50 %, 55 % oder 60 %, vorzugsweise 20% bis 30 %, einer Sehnenlänge dieser stromabwärts nächstfolgenden Leitschaufel endet. Durch dieses besonders bedarfsgerechte Erstrecken des axialen Teilbereichs größerer Wandstärke in Richtung stromabwärts kann ein Durchdringen des Gehäuses durch das Teil des Bauteils der Strömungsmaschine bei dem strukturellen Versagen des Bauteils wenigstens überwiegend auch in einem axialen Teilbereich verhindert werden, in welchem zuvor kein Schutz vorgesehen war. Dabei hat sich gezeigt, dass Teile bei einem strukturellen Versagen auch bis zu dieser Tiefe in axialer Richtung in den axialen Teilbereich eines Leitschaufelrings eindringen können und dort potentiell das Gehäuse durchschlagen können. Eine entsprechend gestaltete Schutzvorrichtung ermöglicht es also, eine besonders sichere Strömungsmaschine zu schaffen.

In weiterer vorteilhafter Ausgestaltung der erfindungsgemäßen Schutzvorrichtung ist es vorgesehen, dass die Schutzvorrichtung eine Mehrzahl von sich aneinander in axialer Richtung abwechselnder Teilbereiche größerer Wandstärke und Teilbereiche geringerer Wandstärke aufweist, wobei die Anzahl der Teilbereiche größerer Wandstärke zu einer Anzahl an Laufschaufelringen korrespondiert. Gerade bei den Laufschaufelstufen handelt es sich um für ein strukturelles Versagen besonders gefährdete Bauteile, welche zudem mit einer besonders hohen kinetischen Energie in das Gehäuse beziehungsweise die Schutzvorrichtung einschlagen können. Eine entsprechende Anzahl von axialen Teilbereichen größerer Wandstärke ermöglicht eine besonders bedarfsgerechte Gestaltung des Gehäuses. Insbesondere kann die Schutzvorrichtung so besonders leicht sein und einen sicheren Betrieb der Strömungsmaschine gewährleisten.

In weiterer vorteilhafter Ausgestaltung der Schutzvorrichtung ist es vorgesehen, dass an den wenigstens einen Teilbereich größerer Wandstärke jeweils in axialer Richtung stromaufwärts und stromabwärts Teilbereiche geringerer Wandstärke angrenzen. Teilbereiche geringerer Wandstärke sind - bei Verwendung identischer Werkstoffe - grundsätzlich leichter als Teilbereiche größerer Wandstärke gleicher axialer Erstreckung. Entsprechend ist es besonders sinnvoll, den Teilbereich größerer Wandstärke auf einen spezifischen axialen Teilbereich zu begrenzen und jeweils anschließend zur Gewichtseinsparung axiale Teilbereiche geringerer Wandstärke vorzusehen.

In weiterer vorteilhafter Ausgestaltung der erfindungsgemäßen Schutzvorrichtung ist es vorgesehen, dass die Schutzvorrichtung eine Mehrzahl von sich aneinander in axialer Richtung abwechselnder Teilbereiche größerer Wandstärke und Teilbereiche geringerer Wandstärke aufweist, wobei das Gehäuse in einem einen Turbinenbereich der Strömungsmaschine wenigstens teilweise radial nach außen begrenzenden Bereich bei einem jeweils in axialer Richtung stromabwärts liegenden Teilbereich größerer Wandstärke jeweils eine größere Wandstärke aufweist als bei einem jeweils vorhergehenden Teilbereich größerer Wandstärke. Mit anderen Worten nimmt also die jeweilige Wandstärke der Teilbereiche größerer Wandstärke mit der Strömungsrichtung zu. Dadurch kann die Schutzvorrichtung besonders leicht und sicher sein.

Insbesondere bei einer Turbine der Strömungsmaschine nimmt in Richtung stromabwärts der Durchmesser jeweiliger Laufschaufelringe zu. Entsprechend ist die oben beschriebene Ausgestaltung der Schutzvorrichtung hier besonders sinnvoll. Bei einem Verdichter der Strömungsmaschine kann dieser Effekt umgekehrt sein. Hier können die stromaufwärts liegenden Laufschaufeln den jeweiligen höchsten Kräften und/oder Belastungen ausgesetzt sein. Entsprechend kann es hier sinnvoll sein, dass das Gehäuse in einem jeweils in axialer Richtung stromabwärts liegenden Teilbereich größerer Wandstärke jeweils eine kleinere Wandstärke aufweist als bei einem jeweils vorhergehenden Teilbereich größerer Wandstärke. Damit kann auch bei dem Verdichter eine möglichst belastungsgerechte Gestaltung der Schutzvorrichtung vorgesehen sein. Diese Systematik gilt dabei vorzugsweise nur für jeweilige Teilbereiche größerer Wandstärke, welche jeweiligen auf einer gemeinsamen Welle befestigten Laufschaufeln zugeordnet sind. Handelt es sich beispielsweise um ein mehrwelliges Flugtriebwerk, können jeweilige aufeinanderfolgende Laufschaufelringe an unterschiedlichen Wellen angeordnet sein und dadurch unterschiedliche Drehgeschwindigkeiten aufweisen. Deswegen sind die auf diese Laufschaufelringe wirkenden Belastungen und/oder Kräfte nicht mehr proportional zu deren Position axialer Position in der Strömungsmaschine. Entsprechend kann es bei einem Übergang in axialer Richtung von einem Laufschaufelring einer ersten Welle zu einem Leitschaufelring einer zweiten Welle auch zu einer Wandstärkendifferenz zwischen verschiedenen aufeinanderfolgenden Teilbereichen größerer Wandstärke kommen, welche nicht korrespondierend zu deren Reihenfolge bzw. axialen Lage zueinander ist.

In weiterer vorteilhafter Ausgestaltung der erfindungsgemäßen Schutzvorrichtung ist es vorgesehen, dass der Teilbereich geringerer Wandstärke mit der größten Wandstärke eine kleinere Wandstärke aufweist als der Teilbereich größerer Wandstärke mit der geringsten Wandstärke. Dadurch ist der Teilbereich größerer Wandstärke besonders widerstandsfähig gegen ein Durchschlagen, während der Teilbereich geringerer Wandstärke besonders leicht sein kann.

In weiterer vorteilhafter Ausgestaltung der erfindungsgemäßen Schutzvorrichtung ist es vorgesehen, dass wenigstens ein Übergangsbereich zwischen den Teilbereichen größerer Wandstärke und den angrenzenden Teilbereichen geringerer Wandstärke eine Oberflächenkrümmung in einem Meridianschnitt der Strömungsmaschine aufweist, wobei sich der Übergangsbereich über eine axiale Länge von wenigstens 50 %, 55 %, 60 %, 65 %, 70 %, 75 %, 80 %, 85 %, 90 %, 95 %, 100 %, 105 %, 110 %, 115 %, 120 %, 125 %, 130 %, 135 %, 140 %, 145 %, 150 %, 155 %, 160 %, 165 %, 170 %, 175 %, 180 %, 185 %, 190 %, 195 %, 200 %, 205 %, 210 %, 215 %, 220 %, 225 %, 230 %, 235 %, 240 %, 245 %, 250 %, 255 %, 260 %, 265 %, 270 %, 275 %, 280 %, 285 %, 290 %, 295 %, oder 300 %, vorzugsweise 100 %, einer Differenz der Wandstärke des Teilbereichs größerer Wandstärke und des daran angrenzenden Teilbereichs geringerer Wandstärke erstreckt. Durch einen solch gekrümmten Übergangsbereich ist das Gehäuse besonders robust. Bei abrupten Änderungen der Wandstärke über die axiale Richtung könnte andernfalls eine Art Schwachstelle in dem Gehäuse vorgesehen sein, welche die Schutzwirkung verringert. Der Teilbereich geringerer Wandstärke grenzt dann insofern nur mittelbar an den Teilbereich größerer Wandstärke an, da beide durch den Übergangsbereich voneinander beabstandet sind.

Außerdem kann durch einen solch gekrümmten Übergangsbereich eine besonders leichte und besonders sichere Schutzvorrichtung geschaffen werden. Auch in dem Übergangsbereich kann es bereits möglich sein, dass ein Teil bei einem strukturellen Versagen einschlägt. Dabei kann dieses Teil jedoch eine geringere kinetische Energie aufweisen als Teile, welche bei einem strukturellen Versagen in dem axialen Teilbereich größerer Wandstärke einschlagen. Entsprechend kann in dem Übergangsbereich eine größere Wandstärke als in dem Teilbereich geringerer Wandstärke möglich sein, wobei jedoch eine geringere Wandstärke notwendig ist als in dem Teilbereich größerer Wandstärke. Durch einen Übergangsbereich mit der Oberflächenkrümmung in einem Meridianschnitt der Strömungsmaschine kann also die Wandstärke des Gehäuses besonders bedarfsgerecht ausgebildet sein.

In weiterer vorteilhafter Ausgestaltung der erfindungsgemäßen Schutzvorrichtung ist es vorgesehen, dass das Gehäuse bei dem Teilbereich geringerer Wandstärke und/oder dem Teilbereich größerer Wandstärke eine über deren axiale Erstreckung konstante Wandstärke aufweist. Teilbereiche des Gehäuses mit konstanter Wandstärke sind besonders einfach und kostengünstig zu fertigen.

In weiterer vorteilhafter Ausgestaltung der erfindungsgemäßen Schutzvorrichtung ist es vorgesehen, dass der Teilbereich größerer Wandstärke und der Teilbereich geringerer Wandstärke gemeinsam durch ein Gehäuseelement des Gehäuses gebildet sind. Die verschiedenen Teilbereiche geringerer Wandstärke und größerer Wandstärke können also integral durch ein Bauteil gebildet sein. Die Fertigung eines solchen Gehäuses kann besonders kostengünstig sein und ein solches Gehäuse ist besonders einfach zu montieren.

In weiterer vorteilhafter Ausgestaltung der erfindungsgemäßen Schutzvorrichtung ist vorgesehen, dass der Teilbereich geringerer Wandstärke durch ein Gehäuseelement gebildet ist und der Teilbereich größerer Wandstärke durch das Gehäuseelement und wenigstens ein daran angeordnetes Zusatzelement. Das Zusatzelement kann dabei beispielsweise als Sicherungsring ausgebildet sein. Das Gehäuseelement kann so besonders einfach gestaltet sein, insbesondere mit einer im Wesentlichen konstanten durchgehend Wandstärke. Dadurch kann das Gehäuseelement besonders kostengünstig zu fertigen sein. So können jeweilige Zusatzelemente bei einer Beschädigung austauschbar sein. Die so gestaltete Schutzvorrichtung ist somit besonders wartungsfreundlich.

In weiterer vorteilhafter Ausgestaltung der erfindungsgemäßen Schutzvorrichtung ist es vorgesehen, dass das wenigstens eine Zusatzelement aus einem anderen Werkstoff als das Gehäuseelement gebildet ist. Damit können jeweilige Werkstoffeigenschaften in dem axialen Teilbereich größerer Wandstärke besonders gut an die Anforderungen bei dem strukturellen Versagen angepasst werden. Insbesondere kann ein Werkstoff eingesetzt werden, welcher eine besonders hohe Widerstandsfähigkeit gegen ein Beschlagen durch ein Teil bei dem strukturellen Versagen aufweist. Dadurch kann die Schutzvorrichtung besonders leicht und/oder besonders sicher sein. Beispielsweise kann das Zusatzelement aus einem Keramikwerkstoff gebildet sein. Insbesondere kann das Zusatzelement als keramischer Schutzring ausgebildet sein. Alternativ oder zusätzlich kann das Zusatzelement beispielsweise auch einen Faserverbundwerkstoff umfassen. Das Gehäuseelement kann dagegen beispielsweise aus einer Metalllegierung bestehen.

Ein zweiter Aspekt der Erfindung betrifft eine Strömungsmaschine mit wenigstens einem Leitschaufelring, wenigstens einer Laufschaufelstufe und mit wenigstens einer Schutzvorrichtung. Bei der Schutzvorrichtung handelt es sich erfindungsgemäß um eine Schutzvorrichtung gemäß dem ersten Erfindungsaspekt. Die sich aus der Verwendung der Schutzvorrichtung gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft ein Flugtriebwerk mit einer Strömungsmaschine gemäß dem zweiten Erfindungsaspekt beziehungsweise mit einer Schutzvorrichtung gemäß dem ersten Erfindungsaspekt. Gerade bei einem Flugtriebwerk ist das daraus resultierende besonders geringe Gewicht vorteilhaft, da so der Treibstoffverbrauch eines Fluggeräts besonders gering sein kann. Weiterhin muss das Containment eines Flugtriebwerks besonders sicher sein, da ein Durchschlagen des Gehäuses besonders schwerwiegende Folgen haben kann. Die sich aus der Verwendung der Schutzvorrichtung gemäß dem ersten Erfindungsaspekt beziehungsweise aus der Verwendung der Strömungsmaschine gemäß dem zweiten Erfindungsaspekt ergebenden Merkmale und Vorteile sind den Beschreibungen des ersten beziehungsweise des zweiten Erfindungsaspekts zu entnehmen, wobei die vorteilhaften Ausgestaltungen des ersten beziehungsweise des zweiten Erfindungsaspekts als vorteilhafte Ausgestaltung des dritten Erfindungsaspekts und umgekehrt anzusehen sind.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt:
- Fig. 1: ausschnittsweise in einer schematischen Meridianschnittansicht eine Strömungsmaschine mit einer Ausgestaltungsform der erfindungsgemäßen Schutzvorrichtung; und
- Fig. 2: in einer schematischen Meridianschnittansicht die erfindungsgemäße Schutzvorrichtung gemäß Fig. 1.

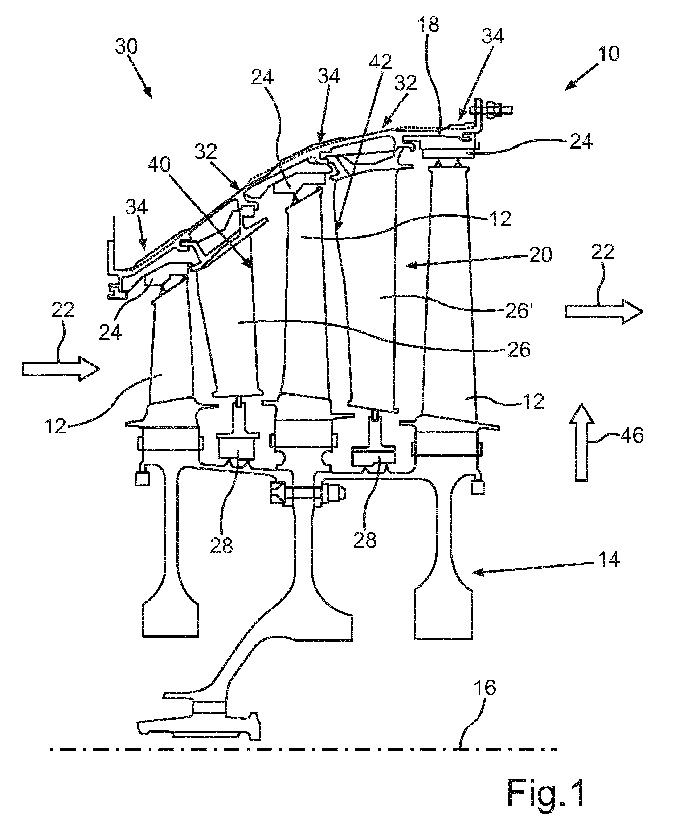

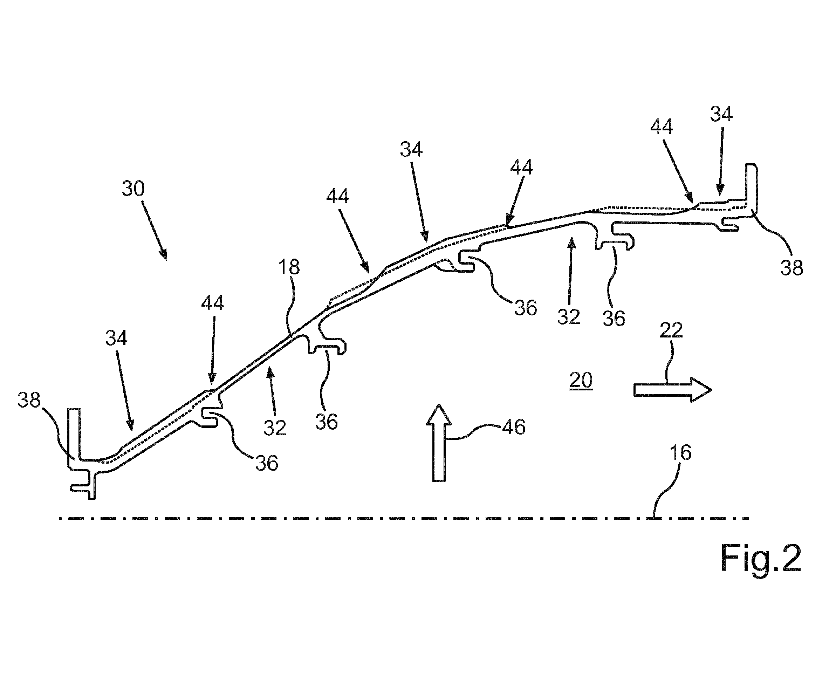

Fig. 1 zeigt in einer Meridianschnittansicht ausschnittsweise eine Strömungsmaschine 10. Diese Strömungsmaschine 10 ist beispielsweise als Gasturbine eines Flugtriebwerks ausgebildet. Der in Fig. 1 gezeigte Ausschnitt der Strömungsmaschine 10 zeigt dabei wenigstens ein Teil der Turbine der Strömungsmaschine 10. Jeweilige Laufschaufeln 12 sind dabei an einer gemeinsamen Welle befestigt, welche sich entlang der Mittelachse 16 erstreckt und in den Figuren nicht dargestellt ist. Die jeweiligen Laufschaufeln 12 sind dabei an miteinander verbundenen Rotorscheiben 14 angeordnet. Die Welle definiert dabei mit ihrer Mittelachse die axiale Längsrichtung der Strömungsmaschine 10. Die Längsachse der Strömungsmaschine 10 - und damit auch ihrer Schutzvorrichtung 30 - ist durch die Strichpunktlinie 16 in Fig. 1 und Fig. 2 kenntlich gemacht.

Ein Strömungsraum 20 wird dabei in erster Linie durch die radial inneren und äußeren Endwälle der Laufschaufeln 12 und jeweiliger Leitschaufeln 26 begrenzt. Durch diesen Strömungsraum 20 strömt bei Betrieb der Strömungsmaschine 10 ein Gasstrom, wobei die Strömungsrichtung durch die Pfeile 22 in Fig. 1 und Fig. 2 kenntlich gemacht ist. Durch diesen Gasstrom werden die Laufschaufeln 12 angetrieben und somit mit der Turbine Energie aus dem Gasstrom zurückgewonnen. Zwischen den Laufschaufeln 12 und dem Gehäuse 18 sind dabei jeweilige Einlaufbeläge 24 vorgesehen. Aufgrund der Einlaufbeläge 24 können die Laufschaufeln 12 mit dem Gehäuse 18 besonders dicht abschließen. Außerdem sind an dem Gehäuse 18 jeweilige Leitschaufeln 26 befestigt, welche ebenfalls in den Strömungsraum 20 hineinragen. Mittels der Leitschaufeln 26 wird der Gasstrom durch den Strömungsraum 20 gerichtet, wodurch die Turbine besonders effizient ist. Zwischen den Leitschaufeln 26 und den Rotorscheiben 14 sind jeweilige weitere Einlaufbeläge 28 angeordnet. Damit können die Leitschaufeln 26 besonders dicht an die Rotorscheiben 14 anschließen, wodurch die Effizienz der Strömungsmaschine 10 ebenfalls besonders hoch ist.

Die Laufschaufeln 12 rotieren also auf der Welle innerhalb des Strömungsraums 20 um die durch die Strichpunktlinie 16 kenntlich gemachte Mittelachse der Strömungsmaschine 10. Die Leitschaufeln 26 sind dagegen fix an dem Gehäuse 18 befestigt und rotieren nicht innerhalb des Strömungsraums 20.

Die Strömungsmaschine 10 umfasst dabei die Schutzvorrichtung 30, welche in der schematischen Meridianschnittansicht von Fig. 2 ohne weitere Bauteile der Strömungsmaschine 10 gezeigt ist. Die Schutzvorrichtung 30 umfasst dabei wenigstens das ringförmige Gehäuse 18. Mittels dieses ringförmigen Gehäuses 18 ist der Strömungsraum 20 der Strömungsmaschine 10 wenigstens teilweise radial nach außen begrenzbar. Die Richtung radial nach außen ist dabei orthogonal zu der Längsachse der Strömungsmaschine 10 und in Fig. 1 und 2 jeweils durch den Pfeil 46 kenntlich gemacht. Mittels der Schutzvorrichtung 30 soll bei einem strukturellen Versagen eines rotierenden Bauteils der Strömungsmaschine 10 ein Durchdringen des Gehäuses 18 durch ein Teil dieses Bauteils wenigstens überwiegend verhindert werden. Dies wird auch als Containment oder als Triebwerkscontainment bezeichnet.

Das Gehäuse 18 weist mehrere axiale Teilbereiche 32 geringerer radialer Wandstärke und daran angrenzende axiale Teilbereiche 34 größerer radialer Wandstärke auf. Außerdem weist das Gehäuse 18 jeweilige Anschlussstellen 36 zum Befestigen der Leitschaufeln 26 an dem Gehäuse 18 auf. Weiterhin weist das Gehäuse 18 jeweilige Befestigungsstellen 38 zum Befestigen an der restlichen Strömungsmaschine 10 auf.

Sowohl in Fig. 2 als auch in Fig. 1 ist die hier beschriebene Ausführungsform der Schutzvorrichtung 30 mit durchgezogenen Linie dargestellt. Dagegen sind die Veränderungen der Schutzvorrichtung 30 gegenüber dem Stand der Technik dadurch dargestellt, dass ein vorheriger Stand der Technik in gegenüber der hier beschriebenen Ausführungsform der Schutzvorrichtung 30 anders ausgestalteten Bereichen mit gestrichelten Linien dargestellt ist.

Nach dem bisherigen Stand der Technik korrespondieren die Teilbereiche 34 größerer radialer Wandstärke in ihrer axialen Erstreckung zu der axialen Erstreckung jeweiliger Leitschaufeln 26. Das heißt, dass sich der Teilbereich 34 größerer Wandstärke gemäß dem Stand der Technik in axialer Richtung der Strömungsmaschine 10 von einer Hinterkante einer in axialer Richtung stromaufwärts von dem Teilbereich 34 größerer Wandstärke nächstliegenden Leitschaufel 26 der Strömungsmaschine 10 stromabwärts bis zu der Vorderkante einer stromabwärts nächstfolgenden Leitschaufel 26' erstreckt. Die Wandstärke des axialen Teilbereichs 34 wurde bei der Auslegung nach dem Stand der Technik mittels einer sogenannten Energiebilanzmethode berechnet. Zudem wurde angenommen, dass bei einem strukturellen Versagen der Laufschaufeln 12 jeweilige Teile die Leitschaufeln 26 nicht durchschlagen können und auch nicht in einem axialen Teilbereich, welcher zu den jeweiligen Leitschaufeln 26 korrespondiert, in das Gehäuse 18 einschlagen können.

Nachteilig ist dabei, dass sich der axiale Teilbereich 34 größerer Wandstärke über einen besonders großen Teilbereich des Gehäuses 18 erstreckt. Damit ist das Gehäuse 18 besonders schwer. Weiterhin hat sich gezeigt, dass Teile auch in das Gehäuse 18 in einem Bereich wenigstens teilweiser axialer Erstreckung der Leitschaufeln 26 einschlagen können. Bei einem strukturellen Versagen können nämlich Teile durch die Leitschaufeln 26 und/oder die Laufschaufeln 12 auch auf eine schräge Flugbahn mit einer axialen und einer radialen Komponente nach außen abgelenkt werden. Das heißt, eine Flugbahn jeweiliger Teile wird in axialer Richtung nicht komplett durch eine Leitschaufel 26 geblockt.

Aus diesem Grund wird die Schutzvorrichtung 30 vorgeschlagen, deren Gestaltung durch durchgezogene Linien dargestellt ist, wodurch auch die Unterschiede gegenüber dem Stand der Technik unmittelbar ersichtlich sind. Dabei ist das Gehäuse 18 derart gestaltet, dass der Teilbereich 34 größerer Wandstärke in axialer Richtung der Strömungsmaschine 10 von einer stromabwärts in Strömungsrichtung der Strömungsmaschine 10 liegenden Hinterkante einer Leitschaufel 26 beabstandet ist und sich in Strömungsrichtung der Strömungsmaschine 10 stromabwärts über eine Vorderkante einer stromabwärts nächstfolgenden Leitschaufel 26' erstreckt. Eine entsprechende Hinterkante ist in Fig. 1 beispielsweise für den mittleren Teilbereich 34 größerer Wandstärke mit dem Bezugszeichen 40 markiert. Eine entsprechende Vorderkante ist in der Fig. 1 durch das Bezugszeichen 42 markiert. Bei jeweiligen axialen Teilbereichen 34 größerer Wandstärke, welche sich am Beginn oder Ende der Strömungsmaschine 10 beziehungsweise der in Fig. 1 gezeigten Turbine befinden, ist jeweils keine nächstfolgende Laufschaufel 26' oder vorhergehende Leitschaufel 26 vorhanden.

In diesem Fall wird die Erstreckung durch das jeweilige Ende der Strömungsmaschine 10, jeweiliger Laufschaufeln 12, Leitschaufeln 26 und/oder des Gehäuses 18 definiert. Teilbereich 34 größerer Wandstärke in einem Endbereich der Strömungsmaschine 10 oder des Gehäuses 18 können sich in axialer Richtung der Strömungsmaschine 10 also von dem Endbereich der Strömungsmaschine 10 oder des Gehäuses 18 bis zu in Strömungsrichtung der Strömungsmaschine 10 stromabwärts beabstandet einer Hinterkante einer in axialer Richtung stromaufwärts nächstliegenden Leitschaufel 26 der Strömungsmaschine 10 oder bis stromabwärts hinter die Vorderkante einer stromabwärts nächstfolgenden Leitschaufel 26' erstrecken.

Im Vergleich zum Stand der Technik ist klar erkennbar, dass die Teilbereiche 34 größerer Wandstärke im Wesentlichen axial in Strömungsrichtung stromabwärts gegenüber dem Stand der Technik verschoben sind. Dadurch ist die Schutzvorrichtung 30 besonders sicher, da die axialen Lagen der Teilbereiche 34 größerer Wandstärke nun den tatsächlich zu erwartenden Einschlagsbereichen von jeweiligen Teilen bei einem strukturellen Versagen besser entsprechen. Außerdem erstrecken sich die jeweiligen Teilbereiche 32 geringerer Wandstärke nun über einen größeren axialen Bereich des Gehäuses 18. Dadurch ist die Schutzvorrichtung 30 besonders leicht.

In dem in Fig. 1 und 2 gezeigten Beispiel ist der Beginn des Teilbereichs 34 größerer Wandstärke in der axialen Mitte des Gehäuses 18 in axialer Richtung stromabwärts beabstandet von der mit dem Bezugszeichen 40 versehenen Hinterkante der Leitschaufel 26 mit einem Abstand von circa 20% bis 30 % der Sehnenlänge dieser Leitschaufel 26. Derselbe Teilbereich 34 größerer Wandstärke endet in axialer Richtung stromabwärts hinter der mit dem Bezugszeichen 42 versehenen Vorderkante einer stromabwärts nächstfolgenden Leitschaufel 26' mit einer radialen Überdeckung von 20% bis 30 % einer Sehnenlänge dieser stromabwärts nächstfolgenden Leitschaufel 26'.

Die Anzahl der axialen Teilbereiche 34 größerer Wandstärke korrespondiert dabei zu der Anzahl von Laufschaufelstufen bzw. der gezeigten Anzahl von Laufschaufeln 12. In dem in Fig. 1 und 2 gezeigten Beispiel gibt es also drei axiale Teilbereiche 34 größerer Wandstärke. Die axialen Teilbereiche 32 geringerer Wandstärke korrespondieren dagegen zu der Anzahl von Leitschaufelstufen bzw. der gezeigten Anzahl von Leitschaufeln 26. In dem in Fig. 1 und 2 gezeigten Beispiel gibt es also zwei axiale Teilbereiche 32 geringerer Wandstärke. Diese Mehrzahl von sich aneinander in axialer Richtung aneinander anschließender Teilbereiche 34 größerer Wandstärke und Teilbereiche 32 geringerer Wandstärke wechseln sich in axialer Richtung miteinander ab.

Dabei weist das Gehäuse 18 in einem jeweils in axialer Richtung stromabwärts liegenden Teilbereich 34 größerer Wandstärke jeweils eine größere Wandstärke auf als bei einem jeweils vorhergehenden Teilbereich 34 größerer Wandstärke. In Strömungsrichtung stromabwärts nimmt der radiale Durchmesser der jeweiligen Laufschaufeln 12 zu. Da die Laufschaufeln 12 und verschiedenen Laufschaufelstufen alle auf der gleichen Welle befestigt sind, drehen sich diese auch alle mit der gleichen Drehgeschwindigkeit.

Zwischen den Teilbereichen 34 größerer Wandstärke und den angrenzenden Teilbereichen 32 geringerer Wandstärke weist das Gehäuse 18 wenigstens einen Übergangsbereich 44 mit einer Oberflächenkrümmung in einem Meridianschnitt, also einem Schnitt mit einer Schnittebene, welche die Drehachse enthält, wie in den Fig. 1 und 2 dargestellt, auf. Der Übergangsbereich 44 erstreckt sich dabei über eine axiale Länge von 50 % bis 300 % einer Differenz der Wandstärke des Teilbereichs 34 größerer Wandstärke und des daran angrenzenden Teilbereichs 32 geringerer Wandstärke. Dadurch entsteht ein Übergangsbereich 44 mit einer schwachen Krümmung. Dadurch ist die Schutzvorrichtung 30 besonders sicher. Bei einer zu starken Krümmung und/oder zu kleinen Radien bis hin zu scharfen Winkeln in dem Übergangsbereich 44 des Gehäuses 18 werden andernfalls Sollbruchstellen gebildet, welche das Gehäuse 18 strukturell schwächen.

Die Teilbereiche 34 größerer Wandstärke und die Teilbereiche 32 geringerer Wandstärke sind gemeinsam durch ein Gehäuseelement des Gehäuses 18 gebildet. Die Teilbereiche 34 größerer Wandstärke und die Teilbereiche 32 geringerer Wandstärke werden also integral in einem gemeinsamen Teil gefertigt. Dadurch kann das Gehäuse 18 besonders kostengünstig hergestellt werden. Außerdem ist so die Montage der Schutzvorrichtung 30 besonders kostengünstig. Alternativ können die Teilbereiche 34 größerer Wandstärke durch wenigstens ein an dem Gehäuseelement angeordnetes Zusatzelement gebildet sein. Beispielsweise können innenseitig und/oder außenseitig an dem Gehäuse 18 jeweilige Zusatzelemente, wie beispielsweise Keramikringe und/oder Faserverbundringe, zum Bilden des Teilbereichs 34 größerer Wandstärke angebracht, insbesondere angeklebt werden. Dadurch kann das Gehäuse 18 in den Teilbereichen 34 größerer Wandstärke durch Verwendung eines anderen Werkstoffs nochmals besonders verstärkt werden.
- 10: Strömungsmaschine
- 12: Laufschaufeln
- 14: Rotorscheibe
- 16: Strichpunktlinie
- 18: Gehäuse
- 20: Strömungsraum
- 22: Pfeil
- 24: Einlaufbelag
- 26: Leitschaufel
- 26': Leitschaufel
- 28: Einlaufbelag
- 30: Schutzvorrichtung
- 32: Teilbereich geringerer Wandstärke
- 34: Teilbereich größerer Wandstärke
- 36: Anschlussstelle
- 38: Befestigungsstelle
- 40: Bezugszeichen
- 42: Bezugszeichen
- 44: Übergangsbereich
- 46: Pfeil

## Patentansprüche

1. Schutzvorrichtung (30) für eine Strömungsmaschine (10), insbesondere eine Gasturbine, mit wenigstens einem ringförmigen Gehäuse (18), mittels welchem ein Strömungsraum (20) der Strömungsmaschine (10) wenigstens teilweise radial nach außen begrenzbar ist und welches wenigstens einen axialen Teilbereich (32) geringerer radialer Wandstärke und wenigstens einen daran angrenzenden axialen Teilbereich (34) größerer radialer Wandstärke aufweist,
**dadurch gekennzeichnet, dass**
das Gehäuse (18) derart ausgestaltet ist, dass der Teilbereich (34) größerer Wandstärke in axialer Richtung der Strömungsmaschine (10) von einer stromabwärts in Strömungsrichtung der Strömungsmaschine (10) liegenden Hinterkante (40) einer Leitschaufel (26) beabstandet ist und sich in Strömungsrichtung der Strömungsmaschine (10) stromabwärts über eine Vorderkante (42) einer stromabwärts nächstfolgenden Leitschaufel (26') erstreckt.

2. Schutzvorrichtung (30) nach Anspruch 1,
**dadurch gekennzeichnet, dass**
der Teilbereich (34) größerer Wandstärke in axialer Richtung stromabwärts beabstandet von der Hinterkante (40) der Leitschaufel (26) mit einem Abstand von 10% bis 60%, vorzugsweise 20% bis 30%, einer Sehnenlänge dieser Leitschaufel (26) beginnt.

3. Schutzvorrichtung (30) nach einem der Ansprüche 1 oder 2,
**dadurch gekennzeichnet, dass**
der Teilbereich (34) größerer Wandstärke in axialer Richtung stromabwärts hinter der Vorderkante (42) der stromabwärts nächstfolgenden Leitschaufel (26') mit einer radialen Überdeckung von 10% bis 60%, vorzugsweise 20% bis 30%, einer Sehnenlänge dieser stromabwärts nächstfolgenden Leitschaufel (26') endet.

4. Schutzvorrichtung (30) nach einem der vorhergehenden Ansprüche,
**dadurch gekennzeichnet, dass**
die Schutzvorrichtung (30) eine Mehrzahl von sich aneinander in axialer Richtung abwechselnder Teilbereiche (34) größerer Wandstärke und Teilbereichen (32) geringerer Wandstärke aufweist, wobei die Anzahl Teilbereiche (34) größerer Wandstärke zu einer Anzahl an Laufschaufelstufen korrespondiert.

5. Schutzvorrichtung (30) nach einem der vorhergehenden Ansprüche,
**dadurch gekennzeichnet, dass**
an den wenigstens einen Teilbereich (34) größerer Wandstärke jeweils in axialer Richtung stromaufwärts und stromabwärts Teilbereiche (32) geringerer Wandstärke angrenzen.

6. Schutzvorrichtung (30) nach einem der vorhergehenden Ansprüche,
**dadurch gekennzeichnet, dass**
die Schutzvorrichtung (30) eine Mehrzahl von sich aneinander in axialer Richtung abwechselnder Teilbereiche (34) größerer Wandstärke und Teilbereichen (32) geringerer Wandstärke aufweist, wobei das Gehäuse (18) in einem einen Turbinenbereich der Strömungsmaschine wenigstens teilweise radial nach außen begrenzenden Bereich bei einem jeweils in axialer Richtung stromabwärts liegenden Teilbereich (34) größerer Wandstärke jeweils eine größere Wandstärke aufweist als bei einem jeweils vorhergehenden Teilbereich (34) größerer Wandstärke.

7. Schutzvorrichtung (30) nach einem der vorhergehenden Ansprüche,
**dadurch gekennzeichnet, dass**
dass der Teilbereich (32) geringerer Wandstärke mit der größten Wandstärke eine kleinere Wandstärke aufweist als der Teilbereich (34) größerer Wandstärke mit der geringsten Wandstärke.

8. Schutzvorrichtung (30) nach einem der vorhergehenden Ansprüche,
**dadurch gekennzeichnet, dass**
wenigstens ein Übergangsbereich (44) zwischen den Teilbereichen (34) größerer Wandstärke und den angrenzenden Teilbereichen (32) geringerer Wandstärke eine Oberflächenkrümmung in einem Meridianschnitt der Strömungsmaschine (10) aufweist, wobei sich der Übergangsbereich (44) über eine axiale Länge von wenigstens 50%, vorzugsweise 100%, einer Differenz der Wandstärke des Teilbereichs (34) größerer Wandstärke und des daran angrenzenden Teilbereichs (32) geringerer Wandstärke erstreckt.

9. Schutzvorrichtung (30) nach einem der vorhergehenden Ansprüche,
**dadurch gekennzeichnet, dass**
das Gehäuse (18) bei dem Teilbereich (32) geringerer Wandstärke und/oder dem Teilbereich (34) größerer Wandstärke eine über deren axiale Erstreckung konstante Wandstärke aufweist.

10. Schutzvorrichtung (30) nach einem der vorhergehenden Ansprüche,
**dadurch gekennzeichnet, dass**
der Teilbereich (34) größerer Wandstärke und der Teilbereich (32) geringerer Wandstärke gemeinsam durch ein Gehäuseelement des Gehäuses (18) gebildet sind.

11. Schutzvorrichtung (30) nach einem der Ansprüche 1 bis 9,
**dadurch gekennzeichnet, dass**
der Teilbereich (32) geringerer Wandstärke durch ein Gehäuseelement gebildet ist und der Teilbereich (34) größerer Wandstärke durch das Gehäuseelement und wenigstens ein daran angeordnetes Zusatzelement.

12. Schutzvorrichtung (30) nach Anspruch 11,
**dadurch gekennzeichnet, dass**
das wenigstens eine Zusatzelement aus einem anderen Werkstoff als das Gehäuseelement gebildet ist.

13. Strömungsmaschine (10) mit wenigstens einem Leitschaufelring, wenigstens einem Laufschaufelstufe und mit wenigstens einer Schutzvorrichtung (30) nach einem der vorhergehenden Ansprüche.

14. Flugtriebwerk mit einer Strömungsmaschine nach Anspruch 13.

## Geänderte Patentansprüche

### Geänderte Patentansprüche gemäss Regel 137(2) EPÜ.

1. Strömungsmaschine (10), insbesondere eine Gasturbine, mit mehreren Leitschaufelringen, wenigstens einer Laufschaufelstufe und mit wenigstens einer Schutzvorrichtung (30), wobei die Schutzvorrichtung (30) wenigstens ein ringförmiges Gehäuse (18) aufweist, mittels welchem ein Strömungsraum (20) der Strömungsmaschine (10) wenigstens teilweise radial nach außen begrenzbar ist und welches wenigstens einen axialen Teilbereich (32) geringerer radialer Wandstärke und wenigstens einen daran angrenzenden axialen Teilbereich (34) größerer radialer Wandstärke aufweist, wobei das Gehäuse (18) derart ausgestaltet ist, dass der Teilbereich (34) größerer Wandstärke in axialer Richtung der Strömungsmaschine (10) von einer stromabwärts in Strömungsrichtung der Strömungsmaschine (10) liegenden Hinterkante (40) einer Leitschaufel (26) beabstandet ist und sich in Strömungsrichtung der Strömungsmaschine (10) stromabwärts über eine Vorderkante (42) einer stromabwärts nächstfolgenden Leitschaufel (26') erstreckt, wobei die Leitschaufel (26) und die stromabwärts nächstfolgenden Leitschaufel (26') an dem Gehäuse (18) befestigt sind und in den Strömungsraum (20) hineinragen,
**dadurch gekennzeichnet, dass**
der Teilbereich (34) größerer Wandstärke in axialer Richtung stromabwärts beabstandet von der Hinterkante (40) der Leitschaufel (26) mit einem Abstand von 10% bis 60% einer Sehnenlänge dieser Leitschaufel (26) beginnt und der Teilbereich (34) größerer Wandstärke in axialer Richtung stromabwärts hinter der Vorderkante (42) der stromabwärts nächstfolgenden Leitschaufel (26') mit einer radialen Überdeckung von 10% bis 60% einer Sehnenlänge dieser stromabwärts nächstfolgenden Leitschaufel (26') endet.

2. Strömungsmaschine (10) nach Anspruch 1,
**dadurch gekennzeichnet, dass**
der Teilbereich (34) größerer Wandstärke in axialer Richtung stromabwärts beabstandet von der Hinterkante (40) der Leitschaufel (26) mit einem Abstand von 20% bis 30% einer Sehnenlänge dieser Leitschaufel (26) beginnt.

3. Strömungsmaschine (10) nach einem der Ansprüche 1 oder 2,
**dadurch gekennzeichnet, dass**
der Teilbereich (34) größerer Wandstärke in axialer Richtung stromabwärts hinter der Vorderkante (42) der stromabwärts nächstfolgenden Leitschaufel (26') mit einer radialen Überdeckung von 20% bis 30% einer Sehnenlänge dieser stromabwärts nächstfolgenden Leitschaufel (26') endet.

4. Strömungsmaschine (10) nach einem der vorhergehenden Ansprüche,
**dadurch gekennzeichnet, dass**
die Schutzvorrichtung (30) eine Mehrzahl von sich aneinander in axialer Richtung abwechselnder Teilbereiche (34) größerer Wandstärke und Teilbereichen (32) geringerer Wandstärke aufweist, wobei die Anzahl Teilbereiche (34) größerer Wandstärke zu einer Anzahl an Laufschaufelstufen korrespondiert.

5. Strömungsmaschine (10) nach einem der vorhergehenden Ansprüche,
**dadurch gekennzeichnet, dass**
an den wenigstens einen Teilbereich (34) größerer Wandstärke jeweils in axialer Richtung stromaufwärts und stromabwärts Teilbereiche (32) geringerer Wandstärke angrenzen.

6. Strömungsmaschine (10) nach einem der vorhergehenden Ansprüche,
**dadurch gekennzeichnet, dass**
die Schutzvorrichtung (30) eine Mehrzahl von sich aneinander in axialer Richtung abwechselnder Teilbereiche (34) größerer Wandstärke und Teilbereichen (32) geringerer Wandstärke aufweist, wobei das Gehäuse (18) in einem einen Turbinenbereich der Strömungsmaschine wenigstens teilweise radial nach außen begrenzenden Bereich bei einem jeweils in axialer Richtung stromabwärts liegenden Teilbereich (34) größerer Wandstärke jeweils eine größere Wandstärke aufweist als bei einem jeweils vorhergehenden Teilbereich (34) größerer Wandstärke.

7. Strömungsmaschine (10) nach einem der vorhergehenden Ansprüche,
**dadurch gekennzeichnet, dass**
dass der Teilbereich (32) geringerer Wandstärke mit der größten Wandstärke eine kleinere Wandstärke aufweist als der Teilbereich (34) größerer Wandstärke mit der geringsten Wandstärke.

8. Strömungsmaschine (10) nach einem der vorhergehenden Ansprüche,
**dadurch gekennzeichnet, dass**
wenigstens ein Übergangsbereich (44) zwischen den Teilbereichen (34) größerer Wandstärke und den angrenzenden Teilbereichen (32) geringerer Wandstärke eine Oberflächenkrümmung in einem Meridianschnitt der Strömungsmaschine (10) aufweist, wobei sich der Übergangsbereich (44) über eine axiale Länge von wenigstens 50%, vorzugsweise 100%, einer Differenz der Wandstärke des Teilbereichs (34) größerer Wandstärke und des daran angrenzenden Teilbereichs (32) geringerer Wandstärke erstreckt.

9. Strömungsmaschine (10) nach einem der vorhergehenden Ansprüche,
**dadurch gekennzeichnet, dass**
das Gehäuse (18) bei dem Teilbereich (32) geringerer Wandstärke und/oder dem Teilbereich (34) größerer Wandstärke eine über deren axiale Erstreckung konstante Wandstärke aufweist.

10. Strömungsmaschine (10) nach einem der vorhergehenden Ansprüche,
**dadurch gekennzeichnet, dass**
der Teilbereich (34) größerer Wandstärke und der Teilbereich (32) geringerer Wandstärke gemeinsam durch ein Gehäuseelement des Gehäuses (18) gebildet sind.

11. Strömungsmaschine (10) nach einem der Ansprüche 1 bis 9,
**dadurch gekennzeichnet, dass**
der Teilbereich (32) geringerer Wandstärke durch ein Gehäuseelement gebildet ist und der Teilbereich (34) größerer Wandstärke durch das Gehäuseelement und wenigstens ein daran angeordnetes Zusatzelement.

12. Strömungsmaschine (10) nach Anspruch 11,
**dadurch gekennzeichnet, dass**
das wenigstens eine Zusatzelement aus einem anderen Werkstoff als das Gehäuseelement gebildet ist.

13. Flugtriebwerk mit einer Strömungsmaschine (10) nach einem der vorhergehenden Ansprüche.
